# FASCICULE DE BREVET EUROPEEN

(11) **EP 3 064 346 B1**
(45) Date de publication et mention de la délivrance du brevet: **24.04.2019**
(21) Numéro de dépôt: 16157289.6
(22) Date de dépôt: 25.02.2016
(51) Int. Cl.: B32B 5/02, B32B 27/12, B32B 27/18, B32B 27/20, B32B 27/30

(54) **DALLE OU LAME ELECTRO-CONDUCTRICE POUR LA RÉALISATION D'UN REVÊTEMENT DE SOL**
ELEKTRISCH LEITFAHIGE BODENPLATTE FÜR FUSSBODEN
ELECTROCONDUCTIVE FLOORBOARD FOR FLOORING

(30) Priorité: 02.03.2015 FR 1551743
(43) Date de publication de la demande: 07.09.2016
(73) Titulaire: GERFLOR, 69100 Villeurbanne (FR)
(72) Inventeur: CEYSSON, Olivier, 84500 BOLLENE (FR); CARIN, Aurélien, 34400 SAINT-CHRISTOL (FR)
(74) Mandataire: Cabinet Laurent & Charras

(56) Documents cités:
- EP-A1- 2 514 587
- WO-A1-2009/118509
- WO-A1-2010/032048
- WO-A2-03/031135
- CA-A- 611 463
- GB-A- 2 471 318
- HU-B- 202 147

## Description

### DOMAINE TECHNIQUE

La présente invention concerne un élément, telle qu'une dalle ou une lame, pour la réalisation d'un revêtement de sol ou similaire, et plus particulièrement un élément présentant des propriétés électro-conductrices propices à l'évacuation des charges électrostatiques.

L'invention trouve une application avantageuse dans la réalisation d'un revêtement de sol conforme aux normes électriques E.S.D., de l'acronyme anglo-saxon « Electrostatic Sensitive Devices », notamment pour un milieu sensible à l'électricité statique.

En effet, il est connu de réaliser des zones dites E.S.D. pour la manipulation de composants électroniques sensibles par exemple, offrant une absence totale de charge électrique isolée par l'emploi de matériaux conducteurs à tous les niveaux puisque les décharges électrostatiques peuvent causer des interférences ou provoquer des pannes desdits composants électroniques.

### ART ANTERIEUR

Il est connu de l'état de la technique des éléments pour la réalisation de revêtement de sols, et notamment des éléments, telles que des dalles ou des lames dites électro-conductrices, lesdits éléments sont obtenus par exemple par extrudage de matière plastique pour former des granules, lesquels granules sont mélangés avec des fibres d'acier inoxydable et de nouveau extrudés et/ou injectés pour former une plaque en matière plastique flexible destinée à être découpée en dalle ou en lame.

L'inconvénient de ces dalles ou lames réside dans leur mode de pose au sol qui n'est pas libre. En effet, celles-ci doivent être collées sur le sol avec une colle acrylique ou conductrice de manière à former un revêtement de sol antistatique. Il est donc préalablement nécessaire de préparer le support desdites dalles ou lames. La stabilité dimensionnelle de ce type de dalles ou lames peut être améliorée.

Il est également connu de réaliser des résines conductrices, comprenant des granulés de noir de carbone, à déposer directement sur le sol pour la formation d'un revêtement de sol électro-conducteur. Cependant, la pose de ce type de revêtement de sol n'est pas libre et nécessite une préparation du support. De plus, le local ou la pièce recevant le support doit être condamné pendant l'opération de pose de la résine.

Il est également connu pour réaliser des revêtements de sol électro-conducteurs, de mettre en oeuvre des rouleaux de polychlorure de vinyle conducteurs, comprenant des granulés de noir de carbone. Cependant, l'inconvénient de ces rouleaux réside dans le fait que la pose n'est pas libre et nécessite une préparation du support. De plus, il est également nécessaire de condamner la pièce devant recevoir les rouleaux lors de la pose desdits rouleaux. Le type de revêtement de sol obtenu n'est pas amovible. Il est impossible de changer une seule dalle. Enfin, la résistance au trafic est relativement faible.

D'autres matériaux sont décrits dans WO03/031135, WO2009/118509, WO2010/032048, GB2471318, HU202147B, CA611463.

### EXPOSE DE L'INVENTION

L'un des buts de l'invention est donc de proposer un élément, telle qu'une dalle ou une lame, permettant la réalisation d'un revêtement de sol dans des environnements types ESD, telles que des salles blanches, des salles de montage de circuit électronique, des salles hospitalières d'opération, etc., permettant de limiter l'accumulation de charges électrostatiques, tout en présentant une structure lui permettant d'obtenir un bon classement selon le classement de la norme française UPEC, c'est-à-dire que ledit élément présente une très bonne résistance à l'usure due à la marche ou au passage, et présente une bonne résistance au poinçonnement : pieds de meubles ou talons aiguille par exemple.

Un autre objectif de l'invention est de fournir un tel élément électro-conducteur présentant une résistivité transversale comprise entre 10⁴ et 10⁶ Ohms.

Un autre objectif de l'invention est de fournir un tel élément permettant une installation rapide, aisée et utilisable sans délai, et de préférence qui soit amovible.

A cet effet, il est proposé un élément, selon la revendication 1.

Par construction, ce type d'élément est apte à présenter une très bonne résistance à l'usure due à la marche ou au passage, et à présenter une bonne résistance au poinçonnement de sorte à prétendre au classement U4 P3 de la norme française UPEC.

L'élément selon l'invention permet également d'obtenir les performances électro-conductrices désirées tout en conservant des performances mécaniques et les avantages d'une pose rapide et aisée.

En effet, l'élément selon l'invention permet d'évacuer les charges électrostatiques via une mise à la terre. Les charges électrostatiques sont notamment conduites depuis la couche d'usure conductrice jusqu'à la sous-couche conductrice pour une mise à la terre. L'élément selon l'invention possède des performances électro-conductrices à travers la totalité de son épaisseur, et de manière continue d'un élément adjacent à une autre.

Avantageusement, et pour améliorer les propriétés électro-conductrices de l'élément selon l'invention, la première et/ou la deuxième armature de renfort est (sont) enrobée(s) d'un liant conducteur, de préférence dans une quantité comprise entre 2 et 50 g/m².

Le liant conducteur comprend du noir de carbone dans une quantité comprise entre 30% et 80% en poids.

Selon une forme de réalisation spécifique, les granulés de matériau conducteur de la couche d'usure et/ou de la couche médiane et de la sous-couche sont des granulés de noir de carbone.

Avantageusement, la couche d'usure comprend entre 4% et 10% en poids de granulés conducteurs contenant ente 15 et 25% en poids de noir de carbone, de sorte à présenter une résistivité transversale comprise entre 10⁴ et 10⁶ Ohms.

Avantageusement, les première et/ou deuxième armatures de renfort sont enrobées de noir de carbone dans une quantité comprise entre 30% et 80% en poids, de sorte à présenter une résistivité superficielle inférieure à 5.10⁴ Ohms.

Avantageusement, la couche médiane et la sous-couche comprennent entre 8% et 25% en poids de granulés conducteurs contenant entre 20 et 35% en poids de noir de carbone, de sorte à présenter une résistivité transversale inférieure à 10⁵ Ohms.

Avantageusement, la couche d'usure est revêtue sur au moins l'une de ses faces, ou les deux, d'une couche de vernis conducteur.

De préférence, la sous-couche est également revêtue, sur sa face envers, d'une couche de vernis conducteur.

### DESCRIPTION SOMMAIRE DES FIGURES

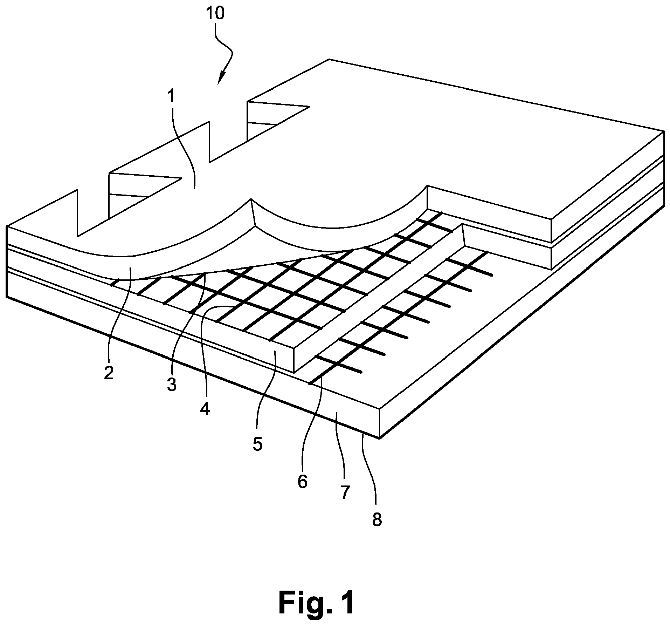

D'autres avantages et caractéristiques ressortiront mieux de la description qui va suivre, de plusieurs variantes d'exécution, données à titre d'exemples non limitatifs, à partir de l'unique figure 1 illustrant une portion d'élément selon l'invention, notamment une portion de dalle par exemple, en coupe transversale.

### DESCRIPTION DETAILLEE DE L'INVENTION

L'invention concerne un élément (10), telle qu'une dalle ou une lame, présentant des propriétés électro-conductrices pour la réalisation d'un revêtement de sol, notamment pour milieu sensible à l'électricité statique.

L'élément (10) présente, de préférence, une forme parallélépipédique et comporte un empilement de couches rendues solidaires les unes des autres. Les différentes couches sont liées les unes aux autres, par exemple, par pressage à chaud, ou par toute autre technique appropriée bien connue de l'Homme du Métier.

L'élément (10) comprend une couche d'usure (2) en matière plastique tel qu'en polychlorure de vinyle. Cette couche d'usure (2) comprend de préférence une épaisseur de 2 mm et comprend des granulés de matériau conducteur, tel que du noir de carbone, de préférence mais non limitativement enrobés dans une matière plastique, notamment du polychlorure de vinyle, et répartis dans l'épaisseur de ladite couche d'usure (2) de sorte à conduire l'électricité statique depuis sa face supérieure jusqu'à sa face inférieure. De préférence, et pour satisfaire au classement U4 P3 de la norme française UPEC, la couche d'usure (2) comprend une densité comprise entre 1.4 et 1.6, un enfoncement rémanent inférieur à 0.10 mm, et une résistance à la chaise à roulettes à 25000 cycles.

Selon une forme de réalisation particulière, la couche d'usure (2) comprend entre 4% et 10% en poids de granulés conducteurs. Ces granulés conducteurs contiennent entre 15 et 25% de noir de carbone de sorte que la couche d'usure (2) présente une résistivité transversale comprise entre 10⁴ et 10⁶ Ohms. De préférence, les granulés conducteurs enrobés comprennent des diamètres compris entre 2,5 et 4 mm, et des longueurs comprises entre 4 et 6 mm. Avantageusement, ladite couche d'usure (2) conductrice bénéficie d'un traitement de surface polyuréthane pour faciliter l'entretien. Pour améliorer davantage les propriétés de conduction des charges électrostatiques, ladite couche d'usure (2) est revêtue, sur au moins l'une de ses faces, ou les deux, d'une couche de vernis conducteur (1, 3), de faible épaisseur, comprise par exemple entre 2 et 50 µm. Par exemple, la couche de vernis (1) disposée sur la face endroit de la couche d'usure, et notamment destinée à constituer la couche de surface de l'élément (10), est, de préférence transparente, et constituée d'un mélange de résines du type uréthane-acrylate et de particules conductrices. Le vernis (1) peut par exemple être un vernis photo-polymérisable. La polymérisation du vernis peut être réalisée de manière conventionnelle, c'est-à-dire au moyen d'émetteurs UV polychromatiques, mais aussi au moyen d'un émetteur laser monochromatique de type laser à excimère.

La couche de vernis (3) disposée sur l'envers de la couche d'usure (2) est un vernis constitué d'un mélange de résines acryliques (10 à 20%) et de noir de carbone (10 à 20%) en dispersion dans une solution hydro-alcoolique.

Le vernis est, par exemple, déposé à l'aide d'une vernisseuse à rouleau puis séché par l'émission d'ondes infrarouges et de lames d'air pour obtenir une couche de vernis (1) sous la forme d'un film continu et sec au toucher. La quantité de vernis est comprise entre 25 et 40 g/m² à l'état humide, soit entre 7,5 et 16 g/m² à l'état sec.

L'élément (10) selon l'invention comprend ensuite, en contact avec la face inférieure de la couche d'usure (2), ou avec la couche de vernis conducteur (3), une première armature de renfort (4) en textile, par exemple sous la forme d'une grille ou d'un quadrillage de fils textiles d'épaisseur négligeable, ou bien d'un voile de verre. Les fils textiles de ladite première armature de renfort (4) sont, de préférence, espacés les uns des autres de 3 mm, selon les dimensions longitudinale et transversale, et comprennent une masse linéique comprise entre 34 et 136 g/m, avantageusement 68g/m.

Selon une forme de réalisation particulière, ladite première armature de renfort (4) est enrobée d'un liant conducteur, tel que de l'alcool polyvinylique dans une quantité comprise entre 2 et 50 g/m² par exemple et comprenant du noir de carbone dans une quantité comprise entre 30% et 80% en poids. Ainsi, la première armature de renfort (4) en textile présente également des propriétés de conduction des charges électrostatiques, et comprend une résistivité superficielle inférieure à 5.10⁴ Ohms.

La couche suivante de l'élément (10) selon l'invention consiste en une couche médiane (5) en matière plastique, tel que du polychlorure de vinyle, comprenant de préférence une épaisseur de 2 mm, et comprenant également des granulés de matériau conducteur, tels que des granulés de noir de carbone répartis dans l'épaisseur de ladite couche médiane (5) de manière à assurer la continuité des propriétés de conduction des charges électrostatiques. De préférence, ladite couche médiane (5) comprend entre 8% et 25% en poids de granulés conducteurs. Ces granulés conducteurs contiennent entre 20 et 35% en poids de noir de carbone, de sorte que ladite couche médiane (5) présente une résistivité transversale inférieure à 10⁵ Ohms. De préférence, les granulés conducteurs comprennent des diamètres compris entre 1 et 4 mm, et des longueurs comprises entre 0.5 et 3.5 mm. De plus, la résistance des granulés pressés est comprise entre 10¹ et 10⁶ Ohms, et notamment plus précisément entre 10² et 10³ Ohms. De préférence, et pour satisfaire par exemple au classement U4 P3 de la norme française UPEC, la couche médiane (5) présente une dureté shore A comprise entre 80 et 95.

L'élément (10) comprend ensuite une deuxième armature de renfort (6), similaire à la première armature de renfort (4), par exemple sous la forme d'une grille ou d'un quadrillage de fils textiles d'épaisseur négligeable, ou bien d'un voile de verre. Les fils textiles de ladite deuxième armature de renfort (6) sont, de préférence, espacés les uns des autres de 3 mm, selon les dimensions longitudinale et transversale, et comprennent une masse linéique comprise entre 34 et 136 g/m, avantageusement 68g/m.

De la même manière que pour la première armature de renfort (4), ladite deuxième armature de renfort (6) est enrobée d'un liant conducteur, tel que de l'alcool polyvinylique dans une quantité comprise entre 2 et 50 g/m² par exemple et comprenant du noir de carbone dans une quantité comprise entre 30% et 80% en poids. Ainsi, la deuxième armature de renfort (6) en textile présente également des propriétés de conduction des charges électrostatiques et comprend aussi une résistivité superficielle inférieure à 5.10⁴ Ohms.

La couche suivante de l'élément (10) selon l'invention consiste en une sous-couche (7) en matière plastique, similaire à la couche médiane (5). En effet, ladite sous-couche (7) est, par exemple, réalisée en polychlorure de vinyle et comprend, de préférence, une épaisseur de 2 mm. La sous-couche (7) comprend également des granulés de matériau conducteur, tels que des granulés de noir de carbone, répartis dans l'épaisseur de ladite sous-couche (7) de manière à assurer la continuité des propriétés de conduction des charges électrostatiques, notamment jusqu'à la terre. De préférence, ladite sous-couche (7) comprend entre 8% et 25% en poids de granulés conducteurs. Ces granulés conducteurs contiennent entre 20 et 35% en poids de noir de carbone, de sorte que ladite sous-couche (7) présente aussi une résistivité transversale inférieure à 10⁵ Ohms. De préférence, les granulés conducteurs comprennent des diamètres compris entre 1 et 4 mm, et des longueurs comprises entre 0.5 et 3.5 mm. De plus, la résistance des granulés pressés est comprise entre 10¹ et 10⁶ Ohms, et notamment plus précisément entre 10² et 10³ Ohms. De préférence, et pour satisfaire par exemple au classement U4 P3 de la norme française UPEC, la sous-couche (7) présente une dureté shore A comprise entre 80 et 95.

Avantageusement, et pour améliorer les propriétés électro-conductrices de l'élément (10), celui-ci comprend sur sa face envers, à savoir sur la face envers de la sous-couche (7), une couche de vernis conducteur (8), de faible épaisseur, et constituée d'un mélange de résines d'acryliques (10 à 20%) et de noir de carbone (10 à 20%) en dispersion dans une solution hydro-alcoolique.

Ce type d'élément (10), telle qu'une dalle ou une lame, permet donc de réaliser un revêtement de sol qui, par sa structure particulière prétend au classement U4 P3 selon la norme française UPEC. Ledit élément (10) permet, en outre, de limiter l'accumulation et d'évacuer les charges électrostatiques via une mise à la terre dans des milieux sensibles à l'électricité statique, tels que des locaux de production d'équipements électroniques, informatiques ou télécoms, des salles blanches, des salles de montage de circuits électroniques, des salles hospitalières d'opération, etc...

L'élément (10) décrit présente une résistivité transversale comprise entre 10⁴ et 10⁶ Ohms, et permet ainsi de répondre aux normes EN 1081, IEC 61340, ESD 7.1., ASTM F150 relatives aux environnements types ESD. L'élément (10) décrit présente par ailleurs un niveau de potentiel de charge permettant de satisfaire à la norme EN1815.

Par construction, l'élément (10) selon l'invention, telle qu'une dalle ou une lame, est du type « plombant » et amovible, c'est-à-dire qui ne nécessite pas de collage définitif sur le support car ledit élément (10) est suffisamment rigide et possède un poids, par exemple entre 8 et 11kg/m², permettant un bon maintien en place. La pose est rapide, aisée et utilisable sans délai.

Ce type d'élément (10) amovible convient pour les zones de trafic intense. Ces éléments (10) allient rapidité de pose, résistance et modularité.

Les éléments (10) « plombants » amovibles ne nécessitent pas obligatoirement une préparation préalable du support. Les éléments (10) doivent notamment être comprimés latéralement afin d'éviter leur déplacement et l'ouverture des joints.

L'invention est adaptable à tout type d'éléments (10) pour revêtement de sols, telles que des dalles ou lames en forme de parallélogramme, à bords droits, sans moyens d'assemblage entre eux, ou par exemple avec des moyens d'assemblement du type queues d'arondes.

Quel que soit le type d'éléments (10), l'invention s'adapte à différents types de poses des éléments (10), telle que la pose libre, ou la pose libre avec adhésif, soudée et/ou collée.

## Revendications

1. Elément (10), telle qu'une dalle ou une lame, résistant à l'usure due à la marche ou au passage et au poinçonnement pour la réalisation d'un revêtement de sol, ou similaire, satisfaisant au classement U4 P3 de la norme française UPEC, et présentant des propriétés électro-conductrices en ayant une résistivité transversale comprise entre 10⁴ et 10⁶ Ohms selon la norme EN 1081, ledit élément (10) est ***caractérisé* en ce qu'**il comprend un empilement de couches solidaires les unes des autres comprenant successivement :
- une couche d'usure (2) en matière plastique comprenant des granulés de matériau conducteur répartis dans l'épaisseur de ladite couche d'usure (2), et présentant une densité comprise entre 1.4 et 1.6, un enfoncement rémanent inférieur à 0.10 mm,
- une première armature de renfort (4) en textile,
- une couche médiane (5) en matière plastique comprenant des granulés de matériau conducteur répartis dans l'épaisseur de ladite couche médiane (5),
- une deuxième armature de renfort (6) en textile,
- une sous-couche (7) en matière plastique comprenant des granulés de matériau conducteur répartis dans l'épaisseur de ladite sous-couche (7),
***et en ce que*** la couche d'usure (2), ou la couche médiane (5), ou la sous-couche (7) est réalisée en polychlorure de vinyle.

2. Élément (10) selon la revendication 1, ***caractérisé* en ce que** ladite première et/ou deuxième armature de renfort (4, 6) sont enrobées d'un liant conducteur.

3. Élément (10) selon la revendication 2, ***caractérisé* en ce que** les première et/ou deuxième armatures de renfort (4, 6) sont enrobées dans un liant conducteur dans une quantité comprise entre 2 et 50 g/m².

4. Élément (10) selon la revendication 3, ***caractérisé* en ce que** le liant conducteur comprend du noir de carbone dans une quantité comprise entre 30% et 80% en poids.

5. Élément (10) selon l'une quelconque des revendications 1 à 4, ***caractérisé* en ce que** les granulés de matériau conducteur de la couche d'usure (2) et/ou de la couche médiane (5) et de la sous-couche (7) sont des granulés de noir de carbone.

6. Élément (10) selon la revendication 5, ***caractérisé* en ce que** la couche d'usure (2) comprend entre 4% et 10% en poids de granulés conducteurs, lesquels granulés conducteurs contiennent entre 15 et 25% en poids de noir de carbone.

7. Élément (10) selon l'une quelconque des revendications 5 à 6, ***caractérisé* en ce que** la couche médiane (5) et la sous-couche (7) comprennent entre 8% et 25% en poids de granulés conducteurs, lesquels granulés conducteurs contiennent entre 20 et 35% en poids de noir de carbone.

8. Élément (10) selon l'une quelconque des revendications 1 à 7 ***caractérisé* en ce que** la couche d'usure (2) est revêtue sur au moins l'une de ses faces, ou les deux, d'une couche de vernis conducteur (1, 3).

9. Élément (10) selon l'une quelconque des revendications 1 à 8 ***caractérisé* en ce que** la sous-couche (7) est revêtue, sur sa face envers, d'une couche de vernis conducteur (8).

## Patentansprüche

1. Element (10), wie eine Platte oder eine Lamelle, verschleißfest gegenüber der Abnutzung durch Betreten oder Passieren und Durchstanzen, zur Herstellung eines Bodenbelages oder ähnlichem das die Einstufung U4 P3 der französischen Norm UPEC erfüllt und elektrisch- leitende Eigenschaften aufweist, mit einem Volumenwiderstand zwischen 10⁴ und 10⁶ Ohm nach Norm EN 1081, dieses Element (10) ist ***dadurch gekennzeichnet,* dass** es einen Stapel miteinander verbundener Schichten umfasst, die nacheinander umfassen:
- eine Abnutzungsschicht (2) aus Kunststoff, die Granulate aus einem leitenden Material enthält, verteilt in der Dicke dieser Abnutzungsschicht (2) die eine Dichte zwischen 1,4 und 1,6 aufweist und eine dauernde Einsenkung von weniger als 0,10 mm,
- eine Verstärkungsschicht (4) aus Textil,
- eine Zwischenschicht (5) aus Kunststoff, umfassend Granulate aus leitendem Material, verteilt in der Dicke dieser Zwischenschicht (5),
- eine zweite Verstärkungsschicht (6) aus Textil,
- eine Unterschicht (7) aus Kunststoff, umfassend Granulate aus leitendem Material, verteilt in der Dicke dieser Unterschicht (7),
***und dadurch,*** dass die Abnutzungsschicht (2) oder die Zwischenschicht (5) oder die Unterschicht (7) aus Polyvinylchlorid ausgeführt ist.

2. Element (10) nach Anspruch 1, ***dadurch gekennzeichnet,* dass** diese erste und/ oder zweite Verstärkungsbewehrung (4, 6) von einem leitenden Bindemittel umhüllt sind.

3. Element (10) nach Anspruch 2, ***dadurch gekennzeichnet,* dass** diese erste und/ oder zweite Verstärkungsbewehrung (4, 6) von einem leitenden Bindemittel in einer Menge zwischen 2 und 50 g/m² umhüllt sind.

4. Element (10) nach Anspruch 3, ***dadurch gekennzeichnet,* dass** dieses leitende Bindemittel Kautschuk- Ruß in einer Menge zwischen 30 und 80 Gewichts-% enthält

5. Element (10) nach einem der Ansprüche 1 bis 4, **dadurch gekennzeichnet, dass** die Granulate aus leitendem Material der Verschleißschicht (2) und/ oder der Zwischenschicht (5) und der Unterschicht (7) Kautschuk-Ruß- Granulate sind.

6. Element (10) nach Anspruch 5, ***dadurch gekennzeichnet,* dass** diese Abnutzungsschicht (2) zwischen 4 und 10 Gewichts-% leitfähiger Granulate enthält, diese leitfähigken Granulate enthalten zwischen 15 und 25 Gewichts-% Kautschuk- Ruß.

7. Element (10) nach Anspruch 5 bis 6, ***dadurch gekennzeichnet,* dass** diese Zwischenschicht (5) und die Unterschicht (7) zwischen 8 und 25 Gewichts-% leitfähiger Granulate enthalten, diese leitfähigen Granulate enthalten zwischen 20 und 35 Gewichts-% Kautschuk- Ruß.

8. Element (10) nach einem der Ansprüche 1 bis 7, ***dadurch gekennzeichnet,* dass** die Abnutzungsschicht (2) auf mindestens einer oder beiden Seiten mit einer leitfähigen Anstrichschicht (1, 3) bedeckt ist.

9. Element (10) nach einem der Ansprüche 1 bis 8, ***dadurch gekennzeichnet,* dass** die Unterschicht (7) auf der Rückseite von einer leitfähigen Anstrichschicht (8) bedeckt ist.

## Claims

1. Component (10), such as a tile or a floorboard, resistant to wear and tear due to walking or passing and punching for the production of a floor covering, or similar, satisfying the U4 P3 classification of the French UPEC standard, and having electroconductive properties with a transverse resistivity of between 10⁴ and 10⁶ Ohms according to EN 1081 standard, said component (10) is ***characterized* in that** it includes a stack of layers integral with one another and including successively:
- a wearing layer (2) of plastic consisting of granules of conductive material spread out through the thickness of said wearing layer (2), and having a density between 1.4 and 1.6, a residual depression of less than 0.10 mm,
- a first textile reinforcing armature (4),
- a middle layer (5) of plastic comprising granules of conductive material spread out through the thickness of said middle layer (5),
- a second textile reinforcing armature (6),
- an under layer (7) of plastic material consisting of granules of conductive material spread out through the thickness of said under layer (7),
***And in that*** the wearing layer (2), or the middle layer (5), or the under layer (7) is made of polyvinyl chloride.

2. Component (10) according to claim 1, ***characterized* in that** said first and/or second reinforcing armature (4, 6) are coated with a conductive binder.

3. Component (10) according to claim 2, ***characterized* in that** the first and/or second reinforcing armatures (4, 6) are coated in a conductive binder in a quantity included between 2 and 50 g/m².

4. Component (10) according to claim 3, ***characterized* in that** the conductive binder contains carbon black in a quantity included between 30% and 80% by weight.

5. Component (10) according to any one of claims 1 to 4, ***characterized* in that** the granules of conductive material in the wearing layer (2) and/or the middle layer (5) and the under layer (7) are granules of carbon black.

6. Component (10) according to claim 5, ***characterized* in that** the wearing layer (2) includes between 4% and 10% by weight of conductive granules, which conductive granules contain between 15% and 25% by weight of carbon black.

7. Component (10) according to any one of claims 5 to 6, ***characterized* in that** the middle layer (5) and the under layer (7) comprise between 8% and 25% by weight of conductive granules, which conductive granules contain between 20% and 35% by weight of carbon black.

8. Component (10) according to any one of claims 1 to 7 ***characterized* in that** the wearing layer (2) is aligned on at least one of its faces, or on both, with a layer of conductive varnish (1, 3).

9. Component (10) according to any one of claims 1 to 8 ***characterized* in that** under layer (7) is coated, on the reverse side, with a layer of conductive varnish (8).
